# EUROPÄISCHE PATENTANMELDUNG

(11) **EP 4 335 815 A1**
(43) Veröffentlichungstag der Anmeldung: **13.03.2024**
(21) Anmeldenummer: 23188823.1
(22) Anmeldetag: 01.08.2023
(51) Int. Cl.: C01B 3/00, C01B 3/50, F17C 11/00, B01D 53/02, B01D 53/86

(54) **WASSERSTOFFSPEICHERANORDNUNG**

(30) Priorität: 25.08.2022 DE 102022121458
(71) Anmelder: Purem GmbH, 66539 Neunkirchen (DE)
(72) Erfinder: Hammer, Jochen, Stuttgart (DE); Zimmermann, Lisa, Esslingen (DE); Többen, Heike, Uhingen (DE); Weinmann, Philipp, Esslingen (DE)
(74) Vertreter: Ruttensperger Lachnit Trossin Gomoll

(57) **Zusammenfassung**

Eine Wasserstoffspeicheranordnung, insbesondere für ein Brennstoffzellensystem in einem Fahrzeug, umfasst wenigstens einen Wasserstofftank (18) zur Speicherung von flüssigem Wasserstoff und wenigstens eine Wasserstoff-Sorption/Katalysator-Einheit (22) zur Sorption und katalytischen Umsetzung von aus dem wenigstens einen Wasserstofftank (18) abgegebenem gasförmigem Wasserstoff (H).

## Beschreibung

Die vorliegende Erfindung betrifft eine Wasserstoffspeicheranordnung, mit welcher beispielsweise in einem in einem Fahrzeug zur Erzeugung elektrischer Energie vorgesehenen Brennstoffzellensystem Wasserstoff gespeichert werden kann.

Bei Wasserstoffspeicheranordnungen, die beispielsweise in Fahrzeugen genutzt werden, um in einem Brennstoffzellensystem Wasserstoff für den Brennstoffzellenprozess bereitstellen, wird der Wasserstoff in wenigstens einem Wasserstofftank in flüssigem Aggregatzustand bei sehr niedrigen Temperaturen von unter -250 °C gespeichert. Wird ein derartiges Brennstoffzellensystem über eine längere Zeit hinweg nicht genutzt, entsteht in derartigem allgemein auch als Kryotanks bezeichneten Wasserstofftanks aufgrund des trotz sehr guter Isolierung unvermeidbaren Wärmeeintrags zu einem Druckanstieg führender gasförmiger Wasserstoff, der zum Vermeiden eines übermäßig hohen Druckanstiegs in einem derartigen Wasserstofftank beispielsweise über einen Wert von etwa 20 bar hinaus in beispielsweise zyklisch durchgeführten Vorgängen kontrolliert abgelassen werden muss.

Es ist die Aufgabe der vorliegenden Erfindung, eine Wasserstoffspeicheranordnung, insbesondere für ein Brennstoffzellensystem in einem Fahrzeug, vorzusehen, bei welchem die Abgabe von übermäßig hoch konzentriertem gasförmigem Wasserstoff zur Umgebung vermieden werden kann.

Erfindungsgemäß wird diese Aufgabe gelöst durch eine Wasserstoffspeicheranordnung, insbesondere für ein Brennstoffzellensystem in einem Fahrzeug, umfassend wenigstens einen Wasserstofftank zur Speicherung von flüssigem Wasserstoff und wenigstens eine Wasserstoff-Sorption/Katalysator-Einheit zur Sorption und katalytischen Umsetzung von aus dem wenigstens einen Wasserstofftank abgegebenem gasförmigem Wasserstoff.

Bei der erfindungsgemäß aufgebauten Wasserstoffspeicheranordnung werden zwei Prozesse genutzt, um die Abgabe von zu stark konzentriertem gasförmigem Wasserstoff zur Umgebung zu vermeiden. Zum einen wird ein Sorptionsprozess genutzt, bei welchem dann, wenn aus dem wenigstens einen Wasserstofftank gasförmiger Wasserstoff abgegeben wird, der nicht in einer Brennstoffzelle zur Erzeugung elektrischer Energie umgesetzt wird, der Wasserstoff vorübergehend sorbiert wird. Der oder zumindest ein wesentlicher Teil des sorbierten Wasserstoffs kann nachfolgend in einem katalytischen Prozess oxidiert und beispielsweise mit Luftsauerstoff zu Wasser umgesetzt werden. Dabei kann die erfindungsgemäße Wasserstoffspeicheranordnung die im Sorptionsprozess in Form von Wärme frei werdende Energie dazu nutzen, die Temperatur der Wasserstoff-Sorption/Katalysator-Einheit auf eine Temperatur im Bereich der oder über der Reaktionstemperatur des katalytischen Prozesses anzuheben. Mit der Sorption von Wasserstoff kann somit der selbst auch Energie freisetzende katalytische Prozess in Gang gesetzt werden, so dass die Möglichkeit besteht, ohne Zufuhr von Energie von außen den aus dem wenigstens einen Wasserstofftank abgegebenen gasförmigen Wasserstoff umzusetzen und die Abgabe von hochkonzentriertem und somit hinsichtlich einer Explosionsgefahr potenziell kritischem Wasserstoff beim Ablassen von gasförmigem Wasserstoff aus dem wenigstens einen Wasserstofftank zu vermeiden.

Um für die Sorption und katalytische Umsetzung von Wasserstoff eine ausreichend große Oberfläche bereitstellen zu können, wird vorgeschlagen, dass die wenigstens eine Wasserstoff-Sorption/Katalysator-Einheit wenigstens ein von gasförmigem Wasserstoff umströmbares Substrat umfasst, wobei an dem Substrat Wasserstoff-Sorptionsmaterial und Wasserstoff-Katalysatormaterial vorgesehen ist.

Dabei kann beispielsweise das wenigstens eine Substrat mit Keramikmaterial aufgebaut sein, oder/und kann das wenigstens eine Substrat eine Vielzahl von von gasförmigem Wasserstoff durchströmbaren Strömungskanälen aufweisen. Insbesondere kann das Substrat eine wabenartige Struktur mit einer Mehrzahl von im Wesentlichen geradlinig sich erstreckenden Strömungskanälen aufweisen. Bei einer alternativen Ausgestaltung kann das Substrat als poröser Körper ausgebildet sein, so dass die Strömungskanäle in der porösen Struktur des Substrats gebildet sind.

Zur Wechselwirkung mit dem aus dem wenigstens einen Wasserstofftank abgegebenen gasförmigen Wasserstoff kann das wenigstens eine Substrat an seiner die Strömungskanäle umgrenzenden Oberfläche das Wasserstoff-Sorptionsmaterial und das Wasserstoff-Katalysatormaterial aufweisen.

Um dies zu erreichen, kann wenigstens ein Teil einer Substratoberfläche des wenigstens einen Substrats mit dem Wasserstoff-Sorptionsmaterial beschichtet sein, und das Wasserstoff-Katalysatormaterial kann wenigstens an einer Oberfläche des Wasserstoff-Sorptionsmaterials vorgesehen sein.

Um insbesondere auch bei sehr niedrigen Umgebungstemperaturen den zur Umsetzung des Wasserstoffs durchzuführenden katalytischen Prozess schnell in Gang setzen zu können, wird vorgeschlagen, dass dem wenigstens einen Substrat eine Heizeinheit zugeordnet ist. Dabei kann die Heizeinheit zur Bereitstellung von Wärme elektrisch erregbar sein.

Die wenigstens eine Wasserstoff-Sorption/Katalysator-Einheit kann bei einer vorteilhaften Ausgestaltung zur Adsorption von Wasserstoff ausgebildet sein.

Um dabei den Prozess der physikalischen Einlagerung von Wasserstoff in die Gitterstruktur des Wasserstoff-Sorptionsmaterial des nutzen zu können, wird vorgeschlagen, dass das Wasserstoff-Sorptionsmaterial Physisorptionsmaterial umfasst. Als für die Einlagerung von Wasserstoff besonders geeignetes Material kann das Physisorptionsmaterial Zeolith umfassen.

Um bei einer alternativen Ausgestaltung den Prozess der chemischen Anlagerung von Wasserstoff an das Wasserstoff-Sorptionsmaterial nutzen zu können, kann das Wasserstoff-Sorptionsmaterial Chemisorptionsmaterial umfassen. Dazu kann beispielsweise das Chemisorptionsmaterial Metallhydrate bildendes Metall, beispielsweise Lithium, ein Gemisch aus Lithium und Aluminium oder ein Gemisch aus Natrium und Bor, umfassen.

Die wenigstens eine Wasserstoff-Sorption/Katalysator-Einheit kann zur katalytischen Oxidation von Wasserstoff ausgebildet sein. Hierzu kann das Wasserstoff-Katalysatormaterial Palladium oder/und Platin umfassen.

Die Erfindung betrifft ferner ein Brennstoffzellensystem, insbesondere für ein Fahrzeug, umfassend wenigstens eine Brennstoffzelle und eine erfindungsgemäß aufgebaute Wasserstoffspeicheranordnung zur Zufuhr von gasförmigem Wasserstoff zu einem Anodenbereich der wenigstens einen Brennstoffzelle.

Die vorliegende Erfindung wird nachfolgend mit Bezug auf die beiliegenden Figuren detailliert beschrieben. Es zeigt:
- Fig. 1: in prinzipartiger Darstellung ein Brennstoffzellensystem beispielsweise für ein Fahrzeug;
- Fig. 2: eine prinzipartige Schnittdarstellung einer Wasserstoff-Sorption/Katalysator-Einheit des Brennstoffzellensystems der Fig. 1;
- Fig. 3: eine Stirnansicht eines vom Wasserstoff umströmbaren Substrats der Wasserstoff-Sorption/Katalysator-Einheit der Fig. 2.

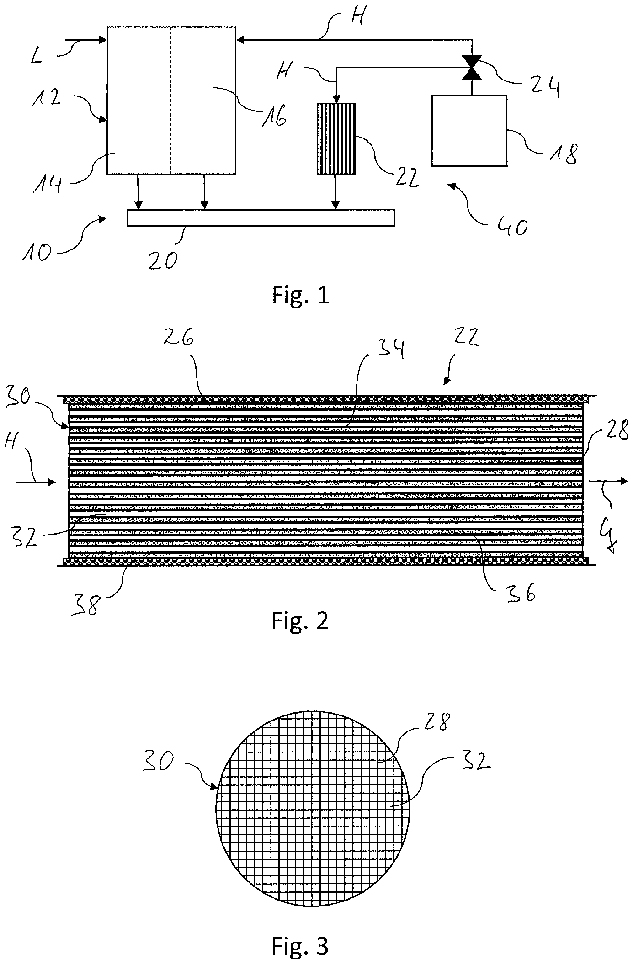

Ein in Fig. 1 dargestelltes Brennstoffzellensystem 10 kann beispielsweise dazu genutzt werden, in einem Fahrzeug elektrische Energie für den Antrieb von Fahrmotoren und für die Versorgung weiterer Verbraucher elektrischer Energie bereitzustellen. Das Brennstoffzellensystem 10 umfasst als zentralen Systembereich eine Brennstoffzelle 12. Einem Kathodenbereich 14 der Brennstoffzellen 12 wird Sauerstoff bzw. ein Sauerstoff enthaltendes Gas L, beispielsweise Luft, zugeführt. Einem Anodenbereich 16 der Brennstoffzelle 12 wird aus einem oder mehreren Wasserstofftanks 18 gasförmiger Wasserstoff H, angesprochen ist damit molekularer Wasserstoff H₂, zugeführt. Der Wasserstoff und der Sauerstoff werden in der Brennstoffzelle 14 unter Erzeugung elektrischer Energie umgesetzt. Den Kathodenbereich 14 und den Anodenbereich 16 verlassendes Brennstoffzellenabgas kann über eine Brennstoffzellen-Abgasanlage 20 zur Umgebung abgegeben werden. In der Brennstoffzellen-Abgasanlage 20 kann beispielsweise im Brennstoffzellenabgas mitgeführtes Wasser bzw. darin enthaltener Wasserdampf vor der Abgabe zur Umgebung abgeschieden werden, so dass an einem Austrittsbereich des Brennstoffzellen-Abgassystems 20 das Entstehen von Nebel verhindert werden kann.

Das in Fig. 1 dargestellte Brennstoffzellensystem 10 umfasst ferner eine Wasserstoff-Sorption/Katalysator-Einheit 22. Diese kann über eine Ventilanordnung 24 in Verbindung mit dem Wasserstofftank 18 sein und bildet zusammen mit dem Wasserstofftank den wesentlichen Systembereich einer Wasserstoffspeicheranordnung 40.

Im Wasserstofftank 18 wird der für den Brennstoffzellenprozess erforderliche Wasserstoff in flüssigem Aggregatzustand bei sehr niedriger Temperatur gespeichert. Dabei kann nach längerer Stillstandzeit des Brennstoffzellensystems 12 im Inneren des Wasserstofftanks 18 über dem flüssigen Wasserstoff sich gasförmiger Wasserstoff bilden, der aus dem Wasserstofftank 18 abgeleitet werden muss. Zum Abblasen von gasförmigem Wasserstoff H aus dem Wasserstofftank 18 leitet die Ventilanordnung 24 den gasförmigen Wasserstoff H zur Wasserstoff-Sorption/Katalysator-Einheit 22. Diese umfasst, wie in den Fig. 2 und 3 schematisch dargestellt, ein in einem beispielsweise rohrartigen Gehäuse 26 aufgenommenes und beispielsweise mit Keramikmaterial 28 monolithisch aufgebautes Substrat 30. In dem Substrat 30 ist eine Vielzahl von Strömungskanälen 32 ausgebildet, durch welche hindurch Gas, insbesondere der über die Ventilanordnung 24 aus dem Wasserstofftank 18 abgegebene gasförmige Wasserstoff H, hindurchströmen kann. Dabei können die Strömungskanäle 32 nach Art einer Wabenstruktur in dem Substrat 30 sich im Wesentlichen geradlinig erstreckend ausgebildet sein und eine mehreckige Querschnittskontur aufweisen.

An seiner die Strömungskanäle 32 umgrenzenden Oberfläche ist das Keramikmaterial 28 des Substrats 30 zumindest bereichsweise mit Wasserstoff-Sorptionsmaterial 34 überzogen. An der Oberfläche des Wasserstoff-Sorptionsmaterials 34 bzw. in dieses eingelagert ist Wasserstoff-Katalysatormaterial 36 vorgesehen. Das Wasserstoff-Sorptionsmaterial dient dazu, den in die Strömungskanäle 32 eingeleiteten gasförmigen Wasserstoff H durch Adsorption am Substrat 30 zu binden, so dass insbesondere am Beginn eines derartigen Prozesses zum Ablassen von gasförmigem Wasserstoff aus dem Wasserstofftank 18 kein hochkonzentriertes Wasserstoffgas über die Wasserstoff-Sorption/Katalysator-Einheit 22 zur Umgebung abgegeben wird. Das Wasserstoff-Katalysatormaterial 36, mit welchem das Wasserstoff-Sorptionsmaterial 34 dotiert ist, dient dazu, den gasförmigen Wasserstoff H in einem katalytischen Prozess zu oxidieren und beispielsweise mit Luftsauerstoff zu Wasser umzusetzen.

Bei der Adsorption von Wasserstoff an dem Wasserstoff-Sorptionsmaterial wird Energie in Form von Wärme frei. Diese in Form von Wärme frei werdende Energie führt dazu, dass das an dem Wasserstoff-Sorptionsmaterial 34 vorgesehene bzw. in dieses eingelagerte Wasserstoff-Katalysatormaterial 36 erwärmt wird und auf eine Temperatur im Bereich der bzw. über der Reaktionstemperatur gebracht wird, bei welcher die katalytisch indizierte Oxidation von Wasserstoff abläuft und bei einem Wert von etwa 100 °C oder darunter liegen kann. Weiterer in das Substrat 30 eingeleiteter Wasserstoff H wird somit katalytisch umgesetzt, so dass ein Wasserstoff entreichertes und beispielsweise Wasser bzw. Wasserdampf enthaltendes Gas G aus der Wasserstoff-Sorption/Katalysator-Einheit 22 abgegeben wird. Dieses Wasserstoff entreicherte Gas G kann beispielsweise in die Brennstoffzellen-Abgasanlage 20 eingeleitet werden, um, ebenso wie dies bei dem Brennstoffzellenabgas der Fall ist, Wasser bzw. Wasserdampf aus diesem abzuscheiden und somit ein im Wesentlichen von Wasser und Wasserdampf befreites Gas zur Umgebung abzugeben.

Bei der durch die im Adsorptionsprozess frei werdenden Energie gestarteten katalytischen Umsetzung von Wasserstoff wird ebenfalls Energie in Form von Wärme freigesetzt, welche zur weiteren Erwärmung einerseits des Wasserstoff-Katalysatormaterials 36 und andererseits auch des Wasserstoff-Sorptionsmaterials 34 führt. Insbesondere durch die Erwärmung des Wasserstoff-Sorptionsmaterials 34 wird in bzw. an diesem sorbierter Wasserstoff wieder freigesetzt und in der bereits ablaufenden katalytischen Reaktion beispielsweise zu Wasser umgesetzt.

Mit der vorangehend beschriebenen Einlagerung bzw. Sorption von Wasserstoff und der katalytischen Umsetzung von Wasserstoff kann gewährleistet werden, dass ein nur eine geringe Menge bzw. Konzentration an Wasserstoff enthaltendes Gas G zur Umgebung abgegeben wird, so dass die potentielle Gefahr der Entzündung bzw. der Explosion von übermäßig stark mit Wasserstoff angereichertem Gas vermieden werden kann. Gleichzeitig ist gewährleistet, dass durch die im Adsorptionsprozess einerseits und in der katalytischen Reaktion andererseits frei werdende Energie der Prozess zum Umsetzen von Wasserstoff auch bei niedrigen Umgebungstemperaturen von beispielsweise unter 0°C der die Verringerung der Wasserstoffkonzentration bewirkende Prozess in Gang gesetzt und selbstständig aufrecht erhalten wird. Da bei diesem Prozess gleichzeitig auch der am Beginn des Prozesses sorbierte Wasserstoff wieder desorbiert und katalytisch umgesetzt wird, wird die Wasserstoff-Sorption/Katalysator-Einheit 22 während des Prozesses regeneriert und steht nach Beendigung des Prozesses für einen weiteren Ablasszyklus zur Verfügung.

Die Fig. 2 zeigt, dass die Wasserstoff-Sorption/Katalysator-Einheit 22 eine beispielsweise elektrisch erregbare Heizeinheit 38 umfassen kann. Diese kann einen oder mehrere das Substrat 30 an einem Außenumfangsbereich wendelartig umgebenden Heizleiter umfassen, welcher bei Anlegen einer elektrischen Spannung Wärme generiert und dadurch das Substrat 30 und damit das daran vorgesehene Wasserstoff-Sorptionsmaterial 34 und auch das Wasserstoff-Katalysatormaterial 36 erwärmt. Somit kann insbesondere bei sehr niedrigen Umgebungstemperaturen durch die vermittels der Heizeinheit 38 zusätzlich zu der im Adsorptionsprozess freigesetzten Energie eingetragene Wärme die katalytische Reaktion sehr schnell in Gang gesetzt wird und somit Wasserstoff oxidiert bzw. zu Wasser umgesetzt wird.

Für die Adsorption von Wasserstoff an dem Wasserstoff-Sorptionsmaterial 34 können verschiedene Prozesse genutzt werden. Das Wasserstoff-Sorptionsmaterial 34 kann beispielsweise Physisorptionsmaterial umfassen, bei welchem der Wasserstoff in die Gitterstruktur des Physisorptionsmaterials eingebunden wird. Als für die Einlagerung von Wasserstoff besonders geeignetes Material kann beispielsweise Zeolith verwendet werden. Bei einem alternativen Prozess bzw. einer alternativen Ausgestaltung kann das Wasserstoff-Sorptionsmaterial 34 Chemisorptionsmaterial umfassen, bei welchem der Wasserstoff durch eine chemische Reaktion sorbiert wird. Ein derartiges Chemisorptionsmaterial kann Metall, beispielsweise Lithium, ein Gemisch aus Lithium und Aluminium oder in Gemisch aus Natrium und Bor, umfassen.

Bei jedem dieser Adsorptionsprozesse wird Wärme freigesetzt und durch Eintrag von Wärme in das Wasserstoff-Sorptionsmaterial 34 kann daran als Sorptiv gebundener Wasserstoff wieder freigesetzt und dann an dem Wasserstoff-Katalysatormaterial 36 umgesetzt bzw. oxidiert werden. Derartiges Wasserstoff-Katalysatormaterial 36 kann Palladium oder/und Platin umfassen.

Es ist abschließend darauf hinzuweisen, dass die bei einer erfindungsgemäß aufgebauten Wasserstoffspeicheranordnung 40, welche als wesentliche Bestandteile einen oder mehrere Wasserstofftanks 18 und eine oder mehrere Wasserstoff-Sorption/Katalysator-Einheiten 22 umfasst, verschiedene Variationen vorgenommen werden können. So kann beispielsweise das Substrat 30 eine andere, beispielsweise eine poröse Struktur aufweisen und auf diese Art und Weise eine Vielzahl von ineinander verschlungenen bzw. ineinander übergehenden Strömungskanälen bereitstellen. Auch kann das von einer derartigen Wasserstoff-Sorption/Katalysator-Einheit 22 abgegebene Wasserstoff entreicherte Gas G direkt zur Umgebung und nicht in eine Brennstoffzellen-Abgasanlage abgegeben werden. Weiter ist zu betonen, dass die erfindungsgemäß aufgebaute Wasserstoffspeicheranordnung 40 nicht nur in Verbindung mit einem Brennstoffzellensystem, insbesondere in einem Fahrzeug Anwendung finden kann. Auch andere, insbesondere auch stationäre Anlagen können eine derartige Wasserstoffspeicheranordnung 40 nutzen, bei welcher die Möglichkeit bereitgestellt ist, wiederholt gasförmigen Wasserstoff aus einem oder mehreren Wasserstofftanks 18 abzulassen und durch den vorangehend beschriebenen Prozess ein Wasserstoff entreichertes Gas zur Umgebung abzugeben.

## Patentansprüche

1. Wasserstoffspeicheranordnung, insbesondere für ein Brennstoffzellensystem in einem Fahrzeug, umfassend wenigstens einen Wasserstofftank (18) zur Speicherung von flüssigem Wasserstoff und wenigstens eine Wasserstoff-Sorption/Katalysator-Einheit (22) zur Sorption und katalytischen Umsetzung von aus dem wenigstens einen Wasserstofftank (18) abgegebenem gasförmigem Wasserstoff (H).

2. Wasserstoffspeicheranordnung nach Anspruch 1, **dadurch gekennzeichnet, dass** die wenigstens eine Wasserstoff-Sorption/Katalysator-Einheit (22) wenigstens ein von gasförmigem Wasserstoff (H) umströmbares Substrat (30) umfasst, wobei an dem Substrat (30) Wasserstoff-Sorptionsmaterial (34) und Wasserstoff-Katalysatormaterial (36) vorgesehen ist.

3. Wasserstoffspeicheranordnung nach Anspruch 2, **dadurch gekennzeichnet, dass** das wenigstens eine Substrat (30) mit Keramikmaterial (28) aufgebaut ist, oder/und dass das wenigstens eine Substrat (30) eine Vielzahl von von gasförmigem Wasserstoff (H) durchströmbaren Strömungskanälen (32) aufweist.

4. Wasserstoffspeicheranordnung nach Anspruch 3, **dadurch gekennzeichnet, dass** das wenigstens eine Substrat (30) an seiner die Strömungskanäle (32) umgrenzenden Oberfläche das Wasserstoff-Sorptionsmaterial (34) und das Wasserstoff-Katalysatormaterial (36) aufweist.

5. Wasserstoffspeicheranordnung nach einem der Ansprüche 2-4, **dadurch gekennzeichnet, dass** wenigstens ein Teil einer Substratoberfläche des wenigstens einen Substrats (30) mit dem Wasserstoff-Sorptionsmaterial (34) beschichtet ist, und dass das Wasserstoff-Katalysatormaterial (36) wenigstens an einer Oberfläche des Wasserstoff-Sorptionsmaterials (34) vorgesehen ist.

6. Wasserstoffspeicheranordnung nach einem der Ansprüche 2-5, **dadurch gekennzeichnet, dass** dem wenigstens einen Substrat eine Heizeinheit (38) zugeordnet ist.

7. Wasserstoffspeicheranordnung nach Anspruch 6, **dadurch gekennzeichnet**, **dadurch gekennzeichnet, dass** die Heizeinheit (38) zur Bereitstellung von Wärme elektrisch erregbar ist.

8. Wasserstoffspeicheranordnung nach einem der Ansprüche 1-7, **dadurch gekennzeichnet, dass** die wenigstens eine Wasserstoff-Sorption/Katalysator-Einheit (22) zur Adsorption von Wasserstoff ausgebildet ist.

9. Wasserstoffspeicheranordnung nach Anspruch 8, sofern auf Anspruch 2 rückbezogen, **dadurch gekennzeichnet, dass** das Wasserstoff-Sorptionsmaterial (34) Physisorptionsmaterial umfasst.

10. Wasserstoffspeicheranordnung nach Anspruch 9, **dadurch gekennzeichnet, dass** das Physisorptionsmaterial Zeolith umfasst.

11. Wasserstoffspeicheranordnung nach Anspruch 8, sofern auf Anspruch 2 rückbezogen, **dadurch gekennzeichnet, dass** das Wasserstoff-Sorptionsmaterial (34) Chemisorptionsmaterial umfasst.

12. Wasserstoffspeicheranordnung nach Anspruch 11, **dadurch gekennzeichnet, dass** das Chemisorptionsmaterial Metall, vorzugsweise Lithium, ein Gemisch aus Lithium und Aluminium oder in Gemisch aus Natrium und Bor, umfasst.

13. Wasserstoffspeicheranordnung nach einem der Ansprüche 1-12, **dadurch gekennzeichnet, dass** die wenigstens eine Wasserstoff-Sorption/Katalysator-Einheit (22) zur katalytischen Oxidation von Wasserstoff ausgebildet ist.

14. Wasserstoffspeicheranordnung nach Anspruch 13, sofern auf Anspruch 2 rückbezogen, **dadurch gekennzeichnet, dass** das Wasserstoff-Katalysatormaterial (36) Palladium oder/und Platin umfasst.

15. Brennstoffzellensystem, insbesondere für ein Fahrzeug, umfassend wenigstens eine Brennstoffzelle (12) und eine Wasserstoffspeicheranordnung (40) nach einem der Ansprüche 1-14 zur Zufuhr von gasförmigem Wasserstoff (H) zu einem Anodenbereich (16) der wenigstens einen Brennstoffzelle (12).
